# EUROPÄISCHE PATENTSCHRIFT

(11) **EP 3 080 563 B1**
(45) Veröffentlichungstag und Bekanntmachung des Hinweises auf die Patenterteilung: **15.09.2021**
(21) Anmeldenummer: 14792816.2
(22) Anmeldetag: 03.11.2014
(51) Int. Cl.: G01F 23/284, G01F 23/26, G01F 23/296

(54) **VORRICHTUNG ZUR MESSUNG DES FÜLLSTANDS EINES FÜLLGUTS IN EINEM BEHÄLTER**
DEVICE FOR MEASURING THE FILLING LEVEL OF A FILLING MATERIAL IN A CONTAINER
DISPOSITIF PERMETTANT DE MESURER LE NIVEAU D'UN PRODUIT DE REMPLISSAGE DANS UN CONTENANT

(30) Priorität: 10.12.2013 DE 102013113766
(43) Veröffentlichungstag der Anmeldung: 19.10.2016
(73) Patentinhaber: Endress+Hauser SE+Co. KG, 79689 Maulburg (DE)
(72) Erfinder: GORENFLO, Stefan, 79688 Hausen (DE); REIMELT, Ralf, 79110 Freiburg (DE)
(74) Vertreter: Andres, Angelika Maria
(86) Internationale Anmeldenummer: PCT/EP2014/073522
(87) Internationale Veröffentlichungsnummer: WO 2015/086225

(56) Entgegenhaltungen:
- EP-A1- 0 961 106
- DE-A1- 10 355 784
- DE-A1-102006 051 102
- DE-A1-102010 038 732
- US-A1- 2010 156 702

## Beschreibung

Die Erfindung bezieht sich auf eine Vorrichtung zur Messung des Füllstands eines Füllguts in einem Behälter, mit einem Füllstandsensor, einem Grenzstandsensor und einer Elektronikeinheit.

Zur Bestimmung des Füllstands eines Füllguts in einem Behälter werden Messsysteme eingesetzt, die unterschiedliche physikalische Größen messen. Anhand dieser Größen wird nachfolgend die gewünschte Information über den Füllstand abgeleitet. Neben mechanischen Abtastern werden kapazitive, konduktive oder hydrostatische Messsonden eingesetzt, ebenso wie Detektoren, die auf der Basis von Ultraschall, Mikrowellen oder radioaktiver Strahlung arbeiten.

Bei Laufzeitverfahren mit elektromagnetischen Hochfrequenzpulsen (TDR-Verfahren oder Puls-Radar-Verfahren) oder mit kontinuierlichen, frequenzmodulierte Mikrowellen (z. B. FMCW-Radar-Verfahren) werden die Messsignale auf ein leitfähiges Element bzw. einen Wellenleiter eingekoppelt und mittels des Wellenleiters in den Behälter, in dem das Füllgut gelagert ist, hineingeführt. Als Wellenleiter kommen die bekannten Varianten: Oberflächenwellenleiter nach Sommerfeld, Goubau oder Lecher-wellenleiter in Frage.

Die kapazitive Füllstandsmessung beruht auf der Änderung der Kapazität eines teilweise durch die Flüssigkeit gebildeten Kondensators bei Veränderung des Füllstandes. Zur Messung bilden eine im Inneren befindliche Sonde und die elektrisch leitende Behälterwand einen elektrischen Kondensator. Alternativ können auch zwei separate Sonden in die Flüssigkeit des Behälters eingetaucht werden, die einen elektrischen Kondensator bilden. Befindet sich die Sonde in Luft, wird eine bestimmte niedrige Anfangskapazität gemessen. Wird der Behälter befüllt, so steigt mit zunehmender Bedeckung der Sonde die Kapazität des Kondensators. Bei der Ausführung der kapazitiven Sonde als Grenzstandschalter schaltet dieser, wenn die bei der Kalibrierung festgelegte Kapazität erreicht wird.

In den meisten Anwendungen bei der kontinuierlichen Füllstandmesstechnik sind zusätzliche Grenzstandsensoren im Behälter eingebaut, um ein Überlaufen bei Fehlfunktion zu verhindern. Durch diese zusätzliche Redundanz lässt sich ein sicherheitsgefährdendes Risiko stark minimieren. Nachteilig ist ein zusätzlicher Aufwand durch zusätzliche Messgeräte, Anschlüsse, Verdrahtung und Elektronikeinheit. DE 10 2006 051102 A1 und EP 0 961 106 A1 beschreiben Vorrichtungen, die beide Füllstandsensoren und Grenzstandsensoren offenbaren, wobei die Grenzstandsensoren den Füllstandsmessgeräten zumindest indirekt zugeordnet sind.

Der Erfindung liegt die Aufgabe zugrunde, eine Vorrichtung bereitzustellen, welche den Füllstand eines Füllguts in einem Behälter bestimmt und mit wenig Aufwand und Kosten vor einem Überlaufen des Behälters warnt.

Die Aufgabe wird erfindungsgemäß durch den Gegenstand der Erfindung gelöst. Der Gegenstand der Erfindung ist eine Vorrichtung zur Messung des Füllstands eines Füllguts in einem Behälter. Die Vorrichtung umfasst einen Füllstandsensor, der so ausgebildet ist, dass er den Füllstand über ein Laufzeitdifferenz-Messverfahren oder ein kapazitives Messverfahren bestimmt, einen Grenzstandsensor zum Überwachen eines Grenzstands des Füllguts in dem Behälter, und eine Elektronikeinheit, die dem Füllstandsensor und/oder dem Grenzstandsensor zugeordnet ist. Die Elektronikeinheit bestimmt anhand der Messdaten des Füllstandsensors den Füllstand des Füllguts in dem Behälter, und überwacht anhand der Messdaten des Grenzstandsensors den Grenzstand des Füllguts in dem Behälter.

Die Aufgabe der Erfindung wird durch das Integrieren des Grenzstandsensors und des Füllstandsensors in eine Vorrichtung gelöst. Da die Vorrichtung sowohl einen Füllstandsensor und einen Grenzstandsensor aufweist, kann kostengünstig und mit wenig Aufwand der Füllstand des Füllguts in dem Behälter bestimmt und rechtzeitig vor einem Überlaufen des Füllguts aus dem Behälter gewarnt werden.

Gemäß einer vorteilhaften Ausgestaltung ist der Füllstandsensor als ein TDR-Füllstandsensor zum Messen des Füllstands entsprechend der Zeitbereichsreflektometrie ausgestaltet.

Gemäß einer günstigen Ausgestaltung ist der Füllstandsensor als ein Metallstab oder als ein Metallseil ausgestaltet.

Gemäß einer vorteilhaften Ausgestaltung ist der Füllstandsensor als eine koaxiale Sonde zum kapazitiven Messen des Füllstands ausgestaltet.

Die kapazitive Sonde bildet einen Kondensator mit dem Füllgut als Dielektrikum, dessen Füllhöhe die Kapazität des Kondensators ändert.

Gemäß einer vorteilhaften Ausführungsform ist der Füllstandsensor als eine Radarantenne oder als Ultraschallsensor ausgestaltet.

Radarantenne und Ultraschallsensor sind Bauteile, die eine präzise Methode für das Laufzeitverfahren bilden.

Gemäß einer vorteilhaften Variante ist der Grenzstandsensor als ein thermischer, resistiver, optischer oder kapazitiver Grenzstandsensor ausgestaltet.

Ein thermischer Grenzstandsensor ändert seine thermische Leitfähigkeit, falls dieser von einem Füllgut bedeckt ist. Ein resistiver Grenzstandsensor ändert seine elektrische Leitfähigkeit, falls dieser von einem Füllgut bedeckt wird. Ein optischer Grenzstandsensor ändert seine Lichtdurchlässigkeit, falls dieser von einem Füllgut bedeckt wird. Ein kapazitiver Grenzstandsensor ändert seine Kapazität, falls dieser von einem Füllgut bedeckt wird.

Gemäß einer günstigen Variante ist der Grenzstandsensor als ein Gassensor zum Bestimmen von Messgrößen der Umgebungsluft ausgestaltet.

Es können optische oder auf Halbleiter basierende Sensoren zur Gasmessung verwendet werden. Ein Ausführungsbeispiel wäre ein Metalloxidgassensor (MOX), der anhand der Leitfähigkeit eines pn-Übergangs, die sich durch Adsorption von Gasmolekülen ändert, die Gaskonzentration misst. Sollte dieser pn-Übergang in einem Füllgut eingetaucht werden, wird dies anhand der Leitfähigkeit erkannt. Mittels eines Gassensors lassen sich zusätzlich weitere Prozesseigenschaften ableiten, die für eine Diagnose herangezogen werden können.

Die Erfindung wird anhand der nachfolgenden Zeichnungen näher erläutert. Es zeigt:
Fig. 1: einen seitlichen Längsschnitt einer erfindungsgemäßen Vorrichtung mit einem Metallstab und einem Grenzstandsensor,
Fig. 2: einen seitlichen Längsschnitt einer erfindungsgemäßen Vorrichtung mit einer koaxialen Sonde und zwei Grenzstandsensoren, und
Fig. 3: einen seitlichen Längsschnitt einer erfindungsgemäßen Vorrichtung mit einer Radarantenne und einem Grenzstandsensor.

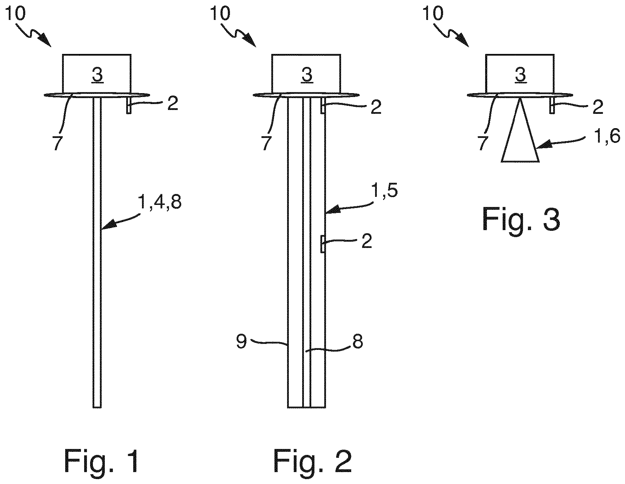

Fig. 1 zeigt einen seitlichen Längsschnitt einer erfindungsgemäßen Vorrichtung 10. Die Vorrichtung 10 umfasst eine Elektronikeinheit 3, die an einer ersten Seitenfläche einer Platte 7 angeordnet ist. Auf der Platte 7 ist gegenüber der ersten Seitenfläche der Platte 7, eine zweite Seitenfläche angeordnet. An der zweiten Seitenfläche der Platte 7 ragt mittig ein Metallstab 8 heraus. Der Metallstab 8 ist zylinderförmig ausgestaltet. Ferner ist auf der zweiten Seitenfläche der Platte 7 ein Grenzstandsensor 2 angeordnet. Der Grenzstandsensor 2 ist seitlich zum Rand der zweiten Seitenfläche der Platte 7 angeordnet.

Der Metallstab 8 kann sowohl als TDR-Füllstandsensor zum Messen des Füllstands entsprechend der Zeitbereichsreflektometrie, als auch zur kapazitiven Füllstandsmessung verwendet werden. Bei einer kapazitiven Füllstandsmessung bildet der Metallstab 8 eine erste Elektrode, ein Behälter, in dem sich ein Füllgut befindet, eine zweite Elektrode und das Füllgut zwischen dem Metallstab 8 und dem Behälter ein Dielektrikum. Je höher der Füllstand des Füllguts ist, desto mehr Dielektrikum befindet sich zwischen dem Metallrohr 8 (erste Elektrode) und dem Behälter (zweite Elektrode). Werden der Metallstab 8 und der Behälter wie Elektroden eines Kondensators mit einer Wechselspannung der Elektronikeinheit 3 beaufschlagt, lässt sich aufgrund des Antwortsignals der Wechselspannung auf den Füllstand des Füllguts in dem Behälter schließen.

Bei einem Betreiben des Metallstabs 8 als TDR-Füllstandsensor, erzeugt die Elektronikeinheit 3 einen elektrischen Puls und koppelt den elektrischen Puls in den Metallstab 8 ein. Ein Teil dieses elektrischen Pulses wird an der Oberfläche des Füllguts reflektiert und gelangt auf diese Weise über den Metallstab 8 zurück zur Elektronikeinheit 3. Aufgrund der Laufzeit des Pulses kann die Elektronikeinheit 3 den Füllstand des Füllguts in dem Behälter bestimmen.

Erreicht der Füllstand den Grenzstandsensor 2, wird der Grenzstandsensor 2 von dem Füllgut bedeckt und der Grenzstandsensor 2 meldet den Zustand "Bedeckt" an die Elektronikeinheit 3.

Fig. 2 zeigt einen seitlichen Längsschnitt einer weiteren Ausgestaltung einer erfindungsgemäßen Vorrichtung 10. Die Vorrichtung 10 weist eine Elektronikeinheit 3 auf, die auf einer ersten Seitenfläche einer Platte 7 angeordnet ist. Auf einer zweiten Seitenfläche der Platte 7 ist ein Füllstandsensor 1 angeordnet, wobei der Füllstandsensor 1 als eine koaxiale Sonde 5 ausgebildet ist. Die koaxiale Sonde 5 ist als ein Metallstab 8, der mittig in einem Metallrohr 9 angeordnet ist, ausgebildet. Der Metallstab 8 und das Metallrohr 9 bilden zwei Elektroden und das Füllgut zwischen dem Metallstab 8 und das Metallrohr 9 bildet das Dielektrikum eines Kondensators, der abhängig von dem Füllstand des Füllguts seine Kapazität ändert.

Ein erster und ein zweiter Grenzstandsensor 2 sind an einer Außenfläche des Metallrohrs 9 angeordnet. Der erste Grenzstandsensor 2 ist an einem Ansatz des Metallrohrs 9 an der zweiten Seitenfläche der Platte 7 angeordnet und der zweite Grenzstandsensor 2 ist in der Mitte des Metallrohrs 9 angeordnet. Die zwei Grenzstandsensoren 2 können das Überschreiten des Grenzstandes des Füllguts an zwei verschiedenen Füllständen überwachen. Sobald der Füllstand des Füllguts eine der zwei Grenzstandsonden 2 erreicht, ist die jeweilige Grenzstandsonde 2 mit Füllgut bedeckt. Diese Grenzstandsonde 2 meldet den Zustand "Bedeckt" weiter an die Elektronikeinheit 3, wodurch ein weiteres Ansteigen des Füllguts verhindert werden kann. Mit Hilfe verteilter Grenzstandsensoren lassen sich kontinuierliche Messergebnisse zusätzlich plausibilisieren.

Fig. 3 zeigt einen seitlichen Längsschnitt eines dritten Ausführungsbeispiels einer erfindungsgemäßen Vorrichtung 10. Die Vorrichtung 10 weist eine Elektronikeinheit 3 an einer ersten Seitenfläche einer Platte 7 auf. Die zweite Seitenfläche der Platte 7 weist eine trichterförmige Radarantenne 6 auf, die als ein Füllstandsensor 1 fungiert. Die Radarantenne 6 sendet Radarwellen aus, die durch die trichterförmige Form in Richtung des Füllguts fokussiert werden. Treffen die Radarwellen auf die Oberfläche des Füllguts, werden sie reflektiert und von der Radarantenne 6 empfangen. Die Radarantenne 6 wandelt die empfangenen elektromagnetischen Wellen in elektrische Signale um und leitet diese an die Elektronikeinheit 3 weiter. Die Elektronikeinheit 3 bestimmt aus der Laufzeit der elektromagnetischen Wellen den Füllstand des Füllguts in dem Behälter.

Ein Grenzstandsensor 2 ist nahe dem Außenrand der zweiten Seitenfläche der Platte 7 angeordnet. Sobald der Füllstand des Füllguts die Grenzstandsonde 2 erreicht, wird diese vom Füllgut bedeckt und der Grenzstandsensor 2 meldet den Zustand "Bedeckt" an die Elektronikeinheit. Auf diese Weise kann ein weiteres Ansteigen des Füllguts verhindert werden.

### Bezugszeichenliste

- 1: Füllstandsensor
- 2: Grenzstandsensor
- 3: Elektronikeinheit
- 4: TDR-Füllstandsensor
- 5: Koaxiale Sonde
- 6: Radarantenne
- 7: Platte
- 8: Metallstab
- 9: Metallrohr
- 10: Vorrichtung

## Patentansprüche

1. Vorrichtung zur Messung des Füllstands eines Füllguts in einem Behälter, umfassend
eine Platte (7), mit einer ersten Seitenfläche und einer gegenüber der ersten Seitenfläche angeordneten zweiten Seitenfläche;
einen an der ersten Seitenfläche der Platte (7) angeordneten Füllstandsensor (1), der so ausgebildet ist, dass er den Füllstand über ein Laufzeitdifferenz-Messverfahren oder ein kapazitives Messverfahren bestimmt,
eine Elektronikeinheit (3), die an der zweiten Seitenfläche der Platte (7) angeordnet ist, und anhand der Messdaten des Füllstandsensors (1) den Füllstand des Füllguts in dem Behälter bestimmt,
einen Grenzstandsensor (2) zum Überwachen eines Grenzstands des Füllguts in dem Behälter,
wobei der Grenzstandsensor (2) an der ersten Seitenfläche der Platte (7) angeordnet ist,
wobei die Elektronikeinheit (3) dem Füllstandsensor (1) und dem Grenzstandsensor (2) zugeordnet ist,
und wobei die Elektronikeinheit (3) anhand der Messdaten des Grenzstandsensors (2) den Grenzstand des Füllguts in dem Behälter überwacht.

2. Füllstandsmessgerät nach Anspruch 1,
**dadurch gekennzeichnet, dass**
der Füllstandsensor (1) als ein TDR-Füllstandsensor (4) zum Messen des Füllstands entsprechend der Zeitbereichsreflektometrie ausgestaltet ist.

3. Füllstandsmessgerät nach Anspruch 2,
**dadurch gekennzeichnet, dass**
der Füllstandsensor (1) als ein Metallstab oder als ein Metallseil ausgestaltet ist.

4. Füllstandsmessgerät nach Anspruch 1,
**dadurch gekennzeichnet, dass**
der Füllstandsensor (1) als eine koaxiale Sonde (5) zum kapazitiven Messen des Füllstands ausgestaltet ist.

5. Füllstandsmessgerät nach Anspruch 1,
**dadurch gekennzeichnet, dass**
der Füllstandsensor (1) als eine Radarantenne (6) oder als Ultraschallsensor ausgestaltet sind.

6. Füllstandsmessgerät nach mindestens einem der vorherigen Ansprüche,
**dadurch gekennzeichnet, dass**
der Grenzstandsensor als ein thermischer, resistiver, optischer oder kapazitiver Grenzstandsensor ausgestaltet ist.

7. Füllstandsmessgerät nach mindestens einem der vorhergehenden Ansprüche,
**dadurch gekennzeichnet, dass**
der Grenzstandsensor (2) als ein Gassensor zum Bestimmen von Messgrößen der Umgebungsluft ausgestaltet ist.

## Claims

1. Apparatus designed to measure the level of a medium in a vessel, said apparatus comprising
a plate (7), with a first side surface and a second side surface arranged opposite the first side surface;
a level sensor (1) arranged on the first side surface of the plate (7), which is designed to determine the level via a procedure to measure the transit time difference or a capacitive measuring procedure,
an electronics unit (3), which is arranged on the second side surface of the plate (7) and determines the level of the medium in the vessel on the basis of the measured data of the level sensor (1),
a point level sensor (2) designed to monitor a point level of the medium in the vessel,
wherein the point level sensor (2) is arranged on the first side surface of the plate (7),
wherein the electronics unit (3) is assigned to the level sensor (1) and to the point level sensor (2),
and wherein the electronics unit (3) monitors the point level of the medium in the vessel on the basis of the measured data of the point level sensor (2).

2. Level transmitter as claimed in Claim 1,
**characterized in that**
the level sensor (1) is designed as a TDR level sensor (4) which is designed to measure the level according to time domain reflectometry.

3. Level transmitter as claimed in Claim 2,
**characterized in that**
the level sensor (1) is designed as a metal rod or as a metal cable.

4. Level transmitter as claimed in Claim 1,
**characterized in that**
the level sensor (1) is designed as a coaxial probe (5) for the capacitive measurement of the level.

5. Level transmitter as claimed in Claim 1,
**characterized in that**
the level sensor (1) is designed as a radar antenna (6) or as an ultrasonic sensor.

6. Level transmitter as claimed in at least one of the previous claims,
**characterized in that**
the point level sensor is designed as a thermal, resistive, optical or capacitance point level sensor.

7. Level transmitter as claimed in at least one of the previous claims,
**characterized in that**
the point level sensor (2) is designed as a gas sensor to determine measured variables of the ambient air.

## Revendications

1. Dispositif destiné à la mesure du niveau d'un produit dans un réservoir, lequel dispositif comprend
une plaque (7), avec une première surface latérale et une deuxième surface latérale disposée à l'opposé de la première surface latérale ;
un capteur de niveau (1) disposé sur la première surface latérale de la plaque (7), qui est conçu pour déterminer le niveau au moyen d'un procédé de mesure de différence de temps de transit ou d'un procédé de mesure capacitif,
une unité électronique (3), laquelle unité est disposée sur la deuxième surface latérale de la plaque (7) et détermine le niveau de produit dans le réservoir sur la base des données de mesure du capteur de niveau (1),
un détecteur de seuil de niveau (2) destiné à la surveillance d'un seuil de niveau du produit dans le réservoir,
le détecteur de seuil de niveau (2) étant disposé sur la première surface latérale de la plaque (7), l'unité électronique (3) étant associée au capteur de niveau (1) et au détecteur de seuil de niveau (2),
et l'unité électronique (3) surveillant le seuil de niveau du produit dans le réservoir sur la base des données de mesure du détecteur de seuil de niveau (2).

2. Transmetteur de niveau selon la revendication 1,
**caractérisé**
**en ce que** le capteur de niveau (1) est conçu en tant que capteur de niveau TDR (4) destiné à la mesure du niveau selon la réflectométrie temporelle.

3. Transmetteur de niveau selon la revendication 2,
**caractérisé**
**en ce que** le capteur de niveau (1) est conçu en tant que tige métallique ou en tant que câble métallique.

4. Transmetteur de niveau selon la revendication 1,
**caractérisé**
**en ce que** le capteur de niveau (1) est conçu en tant sonde coaxiale (5) destinée à la mesure capacitive du niveau.

5. Transmetteur de niveau selon la revendication 1,
**caractérisé**
**en ce que** le capteur de niveau (1) est conçu en tant qu'antenne radar (6) ou en tant que capteur à ultrasons.

6. Transmetteur de niveau selon au moins l'une des revendications précédentes,
**caractérisé**
**en ce que** le détecteur de seuil de niveau est conçu en tant que détecteur de seuil de niveau thermique, résistif, optique ou capacitif.

7. Transmetteur de niveau selon au moins l'une des revendications précédentes,
**caractérisé**
**en ce que** le détecteur de seuil de niveau (2) est conçu en tant que détecteur de gaz destiné à la détermination de grandeurs mesurées de l'air ambiant.
